(19) Europäisches Patentamt
European Patent Office
Office européen des brevets

(11) EP 2 641 759 A1

(12) **EUROPEAN PATENT APPLICATION**
published in accordance with Art. 153(4) EPC

(43) Date of publication:
**25.09.2013 Bulletin 2013/39**

(21) Application number: **10859751.9**

(22) Date of filing: **15.11.2010**

(51) Int Cl.:
***B60G 17/015*** (2006.01) ***B60G 21/055*** (2006.01)

(86) International application number:
**PCT/JP2010/070296**

(87) International publication number:
**WO 2012/066612 (24.05.2012 Gazette 2012/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Toyota Jidosha Kabushiki Kaisha**
**Toyota-shi, Aichi 471-8571 (JP)**

(72) Inventors:
- **KOUMURA, Shingo**
**Toyota-shi**
**Aichi 471-8571 (JP)**
- **YOSHIMI, Tsuyoshi**
**Toyota-shi**
**Aichi 471-8571 (JP)**

(74) Representative: **Winter, Brandl, Fürniss, Hübner, Röss, Kaiser, Polte - Partnerschaft**
**Alois-Steinecker-Strasse 22**
**85354 Freising (DE)**

(54) **VEHICLE CONTROL APPARATUS**

(57) A vehicle control device according to the present invention acquires a roll changing amount generated in a vehicle, acquires a pitch changing amount generated in the vehicle, synthesizes the roll changing amount and the pitch changing amount to acquire a synthesized value, and controls a front/rear wheel damping force distribution based on the synthesized value. The vehicle control device according to the present invention includes a roll damping force varying means that detects a vehicle speed, detects a road surface in-phase/reverse-phase ratio, and controls a roll damping force by a variable roll damping control amount, where the front/rear wheel damping force distribution is determined from a front/rear wheel damping force distribution map based on the vehicle speed, the road surface in-phase/reverse-phase ratio, and the roll damping control amount.

FIG.2

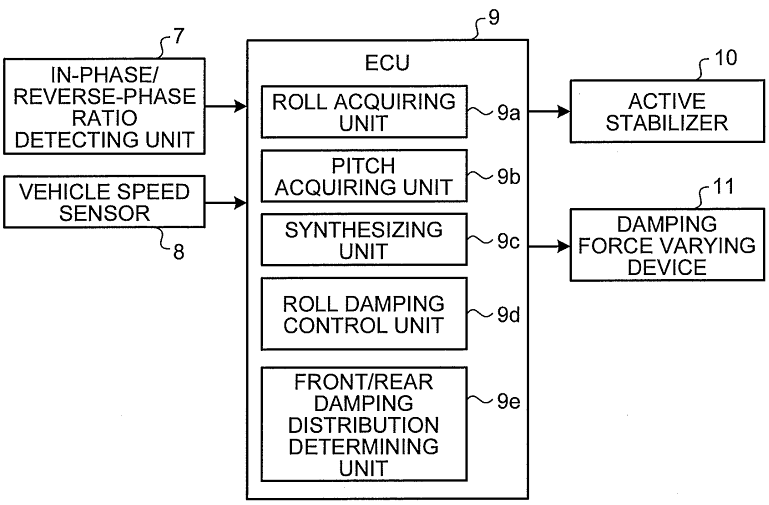


EP 2 641 759 A1

## Description

VEHICLE CONTROL DEVICE

### Field

The present invention relates to a vehicle control device.

### Background

A technique that alleviates vibration in a pitch direction and a roll direction by variably controlling a damping force from a shock absorber is conventionally known.

For example, patent literature 1 discloses a technique of first suppressing a roll vibration by a shock absorber, and then changing an damping distribution by the shock absorber to suppress the pitch vibration at the time when roll occurrence is detected since the sensitivity of humans is more sensitive to the roll vibration than to the pitch vibration.

Patent literature 2 discloses a technique of detecting a pitch component, a roll component, and a heave component with a plurality of means by estimation and actual measurement, synthesizing the detected values, suppressing the synthesized pitch component and the heave component by the damping force control and suppressing the synthesized roll component by the roll rigidity control of a stabilizer.

### Citation List

### Patent Literature

Patent Literature 1: Japanese Patent Application Laid-open No. 2009-179228

Patent Literature 2: Japanese Patent Application Laid-open No. 2008-265610

### Summary

### Technical Problem

However, improvement still can be made in suppressing the roll vibration and the pitch vibration in view of the sensitivity of humans.

In particular, in patent literature 1, improvement can be made to simultaneously suppress the roll vibration and the pitch vibration since the pitch vibration is suppressed after the roll vibration is preferentially suppressed. Furthermore, in patent literature 2, improvement can be made since the relationship between the pitch component and the roll component changes by items not yet taken into consideration although the pitch component, the roll component, and the like are calculated according to a human sensitivity function.

In view of the above, it is an object of the present invention to provide a vehicle control device capable of accurately suppressing the roll vibration and the pitch vibration simultaneously.

### Solution to Problem

A vehicle control device according to the present invention includes a roll acquiring means configured to acquire a roll changing amount generated in a vehicle; a pitch acquiring means configured to acquire a pitch changing amount generated in the vehicle; a synthesizing means configured to synthesize the roll changing amount and the pitch changing amount to acquire a synthesized value; and a front/rear wheel damping force distributing means configured to control a front/rear wheel damping force distribution based on the synthesized value acquired by the synthesizing means.

In the vehicle control device, it is preferable that the front/rear wheel damping force distributing means controls the front/rear wheel damping force distribution such that the synthesized value becomes a minimum.

In the vehicle control device, it is preferable that the roll acquiring means or the pitch acquiring means acquires a roll angular speed, which is the roll changing amount, or a pitch angular speed, which is the pitch changing amount, based on at least one of a vehicle speed, a road surface in-phase/reverse-phase ratio and a roll damping control amount.

In the vehicle control device, it is preferable that the synthesizing means calculates the synthesized value with a weighting of the roll changing amount made large with respect to the pitch changing amount.

A vehicle control device according to the present invention includes a vehicle speed detecting means configured to detect a vehicle speed; an in-phase/reverse-phase ratio detecting means configured to detect a road surface in-phase/reverse-phase ratio; and a roll damping force varying means configured to control a roll damping force by a variable roll damping control amount, wherein a front/rear wheel damping force distribution is determined from a front/rear wheel damping force distribution map based on the vehicle speed, the road surface in-phase/reverse-phase ratio and the roll damping control amount.

## Advantageous Effects of Invention

The vehicle control device according to the present invention has an effect in being able to simultaneously suppress roll and pitch since the front/rear wheel damping force distribution is controlled based on the synthesized value of roll and pitch.

The vehicle control device according to the present invention controls the front/rear wheel damping force distribution such that the synthesized value becomes a minimum. The effect that roll and pitch can be simultaneously suppressed is thus obtained since the front/rear wheel damping force distribution is controlled based on the synthesized value of roll and pitch.

The vehicle control device according to the present invention has an effect of being able to accurately detect roll and pitch and simultaneously suppress the roll and pitch since the roll angular speed or the pitch angular speed is acquired based on at least one of vehicle speed, road surface in-phase/reverse-phase ratio, or roll damping control amount.

The vehicle control device according to the present invention has an effect of being able to simultaneously suppress roll and pitch in view of the sensitivity of humans since the synthesized value is calculated with the weighting of the roll changing amount made large with respect to the pitch changing amount.

The vehicle control device according to the present invention detects the vehicle speed, detects the road surface in-phase/reverse-phase ratio, controls the roll damping force by the variable roll damping control amount, and determines the front/rear wheel damping force distribution from the front/rear wheel damping force distribution map based on the vehicle speed, the road surface in-phase/reverse-phase ratio, and the roll damping control amount. The effect that roll and pitch can be simultaneously suppressed is thus obtained since the front/rear wheel damping force distribution is controlled based on the synthesized value of roll and pitch.

## Brief Description of Drawings

FIG. 1 is a schematic view illustrating a schematic configuration of a vehicle control device according to the present embodiment.

FIG. 2 is a block diagram illustrating a configuration of an ECU 9 in a vehicle control device 1 of the present embodiment.
FIG. 3 is a view schematically illustrating an example of an in-phase input from a road surface to left and right wheels.
FIG. 4 is a view schematically illustrating an example of a reverse phase input from the road surface to the left and right wheels.
FIG. 5 is a flowchart illustrating one example of processing of the vehicle control device 1 according to the present embodiment.
FIG. 6 is a view illustrating a relationship of a roll angular speed and a pitch angular speed when the front/rear damping distribution is changed at a vehicle speed 40 km/h.
FIG. 7 is a view illustrating a relationship of the roll angular speed and the pitch angular speed when the front/rear damping distribution is changed at the vehicle speed 80 km/h.
FIG. 8 is a view illustrating a relationship of the roll angular speed and the pitch angular speed when the front/rear damping distribution is changed at the vehicle speed 120 km/h.
FIG. 9 is a view in which a synthesized value of a roll amount and a pitch amount is plotted at the vehicle speed 40 km/h.
FIG. 10 is a view in which a synthesized value of the roll amount and the pitch amount is plotted at the vehicle speed 80 km/h.
FIG. 11 is a view in which a synthesized value of the roll amount and the pitch amount is plotted at the vehicle speed 120 km/h.
FIG. 12 is a view in which the front/rear damping distribution, in which the synthesized value of the roll angular speed and the pitch angular speed becomes a minimum, is plotted for when there is no roll damping control amount.
FIG. 13 is a view in which the front/rear damping distribution, in which the synthesized value of the roll angular speed and the pitch angular speed becomes a minimum, is plotted for when the roll damping control amount is small.
FIG. 14 is a view in which the front/rear damping distribution, in which the synthesized value of the roll angular speed and the pitch angular speed becomes a minimum, is plotted for when the roll damping control amount is large.
FIG. 15 is a flowchart illustrating a modified example of the processing of the vehicle control device according to the present embodiment.

Description of Embodiments

An embodiment according to the present invention will be hereinafter described in detail based on the drawings. It should be recognized that the present invention is not to be limited by the embodiment. The configuring elements in the embodiment described below include elements that can be replaced by those skilled in the art and are easy or substantially the same elements.

[Embodiment]

A configuration of a vehicle control device according to the present embodiment will be first described, and then, processing of the present vehicle control device will be described.

[1. Configuration]

FIG. 1 is a schematic view illustrating a schematic configuration of a vehicle control device according to the present embodiment. As illustrated in FIG. 1, a vehicle control device 1 of the present embodiment is a system that is mounted on a vehicle 2 to control this vehicle 2, and is specifically, a vehicle control device that controls front/rear wheel damping force distribution according to a synthesized value of a pitch amount and a roll amount of the vehicle 2.

The vehicle 2 includes a left front wheel 3FL, a right front wheel 3FR, a left rear wheel 3RL, and a right rear wheel 3RR as a wheel 3, which are simply referred to as the wheel 3 if there is no need to particularly distinguish one from the other. In the following description, a subscript FL refers to the configuring element relating to the left front wheel, FR refers to the configuring element relating to the right front wheel, RL refers to the configuring element relating to the left rear wheel, and RR refers to the configuring element relating to the right rear wheel. For example, each wheel 3 (3FL, 3FR, 3RL, 3RR) has a tire 4 (4FL, 4FR, 4RL, 4RR). In the following description, the left front wheel 3FL and the right front wheel 3FR are described altogether as "front wheel 3F" and the left rear wheel 3RL and the right rear wheel 3RR are described altogether as "rear wheel 3R" if there is not particular need to distinguish one from the other.

The vehicle 2 includes a travelling drive source (prime mover) in a vehicle body 2A, and for example, the power generated by an internal combustion, electric motor, and the like acts on the wheel 3 (e.g., left front wheel 3FL, right front wheel 3FR), which is the drive wheel, thus producing a driving force [N] at the contact area with the road surface of the wheel 3 and enabling the vehicle 2 to travel. The vehicle 2 can steer the wheel 3 (e.g., left front wheel 3FL, right front wheel 3FR), which is the steering wheel, through a power steering device (not illustrated) by operating a steering wheel 5, and thus can be turned.

A front-back direction of the vehicle 2 described below refers to a direction along a travelling direction of the vehicle 2, and a left-right direction of the vehicle 2 refers to a width direction of the vehicle 2 orthogonal to the front-back direction and a vertical direction. A roll direction is a direction about a front-back axis, which is an axis along the front-back direction of the vehicle 2, and a pitch direction is a direction about a left-right axis, which is an axis along the left-right direction of the vehicle 2.

The vehicle control device 1 of the present embodiment generally includes an in-phase/reverse-phase ratio detecting unit 7, a vehicle speed sensor 8, an ECU 9, an active stabilizer 10, and a damping force varying device 11.

Among such units, the in-phase/reverse-phase ratio detecting unit 7 is a sensor for detecting a road surface in-phase/reverse-phase ratio. The road surface in-phase/reverse-phase ratio is the in-phase and reverse phase of the road surface with respect to the vehicle 2, and is expressed with a percentage of a reverse phase input with respect to an in-phase input from the road surface to the left and right wheels. FIG. 3 is a view schematically illustrating an example of the in-phase input from the road surface to the left and right wheels, and FIG. 4 is a view schematically illustrating an example of the reverse phase input from the road surface to the left and right wheels. The figures illustrate a case in which the vehicle 2 is seen from the rear side, where the square on the left and the right in the figures represents the left front wheel 3FL and the right front wheel 3FR, or the left rear wheel 3RL and the right rear wheel 3RR.

As illustrated in FIG. 3, the in-phase input refers to an input in which the input (arrow in the figure) from the road surface to the left and right wheels is in the same direction. As illustrated in FIG. 4, on the other hand, the reverse phase input refers to an input in which the input (arrow in the figure) from the road surface to the left and right wheels is in opposite direction. The percentage of the reverse phase input with respect to the in-phase input is the road surface in-phase/reverse-phase ratio. That is, the in-phase/reverse-phase ratio of the road surface indicates the ratio of the sum and the difference in the inputs from the road surface to the left and right wheels for the inputs on the left and right wheels from the road surface. By way of example, the in-phase/reverse-phase ratio detecting unit 7 may detect a load on each wheel 3 with a load sensor, and calculate the ratio of the sum and the difference of the load input to the left and right wheels to obtain the in-phase/reverse-phase ratio.

The vehicle speed sensor 8 is a sensor for detecting the vehicle speed of the vehicle 2. The vehicle speed sensor 8 detects the vehicle speed, which is the travelling speed of the vehicle 2, and for example, detects the vehicle speed by detecting a rotation speed of a rotating body on an output side such as an output shaft. The vehicle speed sensor 8 is electrically connected to the ECU 9 to transmit the detected vehicle speed signal of the vehicle 2 to the ECU 9. The vehicle speed detecting device may be a wheel speed sensor for detecting a wheel speed of each wheel 3, in which case, the ECU 9 may obtain the vehicle speed of the vehicle 2 based on each wheel speed detected by each wheel speed sensor arranged in each wheel 3.

The active stabilizer (hereinafter referred to as "active stabilizer") 10 is a roll damping force varying means that controls a roll damping force by a variable roll damping control amount, and is a stabilizing mechanism that suppresses roll vibration by the roll damping force. For example, the active stabilizer 10 suppresses the roll vibration that rotates the vehicle body 2A of the vehicle 2 in the roll direction using the roll damping force of the vehicle 2 to ensure a stable position of the vehicle 2, and also assumes that the roll damping force varies and adjusts the same according to the operation state of the vehicle 2 to enhance the steering stability of the vehicle 2. The roll damping force of the vehicle 2 corresponds to the damping force along the roll direction of the vehicle 2. The active stabilizer 10 is configured by a front wheel active stabilizer 10F, which is arranged with respect to the left front wheel 3FL and the right front wheel 3FR to adjust the roll damping force on the front wheel 3F side, and a rear wheel active stabilizer 10R, which is arranged with respect to the left rear wheel 3RL and the right rear wheel 3RR to adjust the roll damping force on the rear wheel 3R side. However, these do not need to be particularly distinguished and may be simply described as the active stabilizer 10.

The active stabilizer 10 includes a stabilizer bar 12 and an actuator 13, and uses a torsional reactive force of the stabilizer bar 12 to suppress the roll of the vehicle body 2A of the vehicle 2. The stabilizer bar 12 has a pair of left and right torsion bar sections coupled in a relatively rotatable manner by the actuator 13, and a pair of left and right arm sections bent and coupled to a suspension 14 (e.g., lower arm of suspension 14) corresponding to each wheel 3. The suspension 14 is a suspending device interposed between the wheel 3 and the vehicle body 2A to alleviate impact and vibration transmitted from the road surface to the vehicle body 2A, and constitutes one part of the damping force varying device 11 to be described later. The actuator 13 is a drive unit for changing the roll damping force of the active stabilizer 10. The actuator 13 is connected to the ECU 9, and is controlled by a roll damping control amount (command value) by the ECU 9.

The active stabilizer 10 drives the actuator 13 configured including an electric motor, and the like, and adjusts the relative torsion amount of the left and right torsion bar sections by relatively rotating each torsion bar section of the stabilizer bar 12 divided to left and right, so that the torsional reactive force can be adjusted and the roll rigidity of the vehicle 2 can be adjusted. That is, the active stabilizer 10 adjusts the spring property by adjusting the torsion amount, that is, the torsion rigidity of the stabilizer bar 12 with the actuator 13, adjusts the roll rigidity of the vehicle body 2A of the vehicle 2 to change the roll damping force, and performs the control of the roll movement. For example, when the roll damping control amount from the ECU 9 becomes large, the active stabilizer 10 increases the output torque (rotation driving force) of the actuator 13. When the rotation angle of the actuator 13 increases and the torsion amount of the stabilizer bar 12 becomes large, the torsional reactive force acting on the stabilizer bar 12 becomes large and the roll rigidity of the vehicle body 2A of the vehicle 2 becomes high, that is, the roll damping force becomes large.

The damping force varying device 11 is a device capable of adjusting the damping force of when the wheel 4 is stroked with respect to the vehicle body 2A, and changes the damping force property of the shock absorber of the suspension 14 that buffers the road surface input from the road surface to the wheel 3, for example, with an actuator (not illustrated). The damping force thus varies, and the comfortableness in riding and the travelling performance of the vehicle 2 can be changed by adjusting the damping force according to the driving state of the vehicle 2. The damping force varying device 11 is a so-called damping force control suspension system, and is for example, AVS (Adaptive Variable Suspension System).

As illustrated in FIG. 1, the damping force varying device 11 is configured to include a damping force varying device 11FL arranged with respect to the left front wheel 3FL to be able to adjust the damping force on the left front wheel 3FL side, a damping force varying device 11FR arranged with respect to the right front wheel 3FR to be able to adjust the damping force on the right front wheel 3FR side, a damping force varying device 11RL arranged with respect to the left rear wheel 3RL to be able to adjust the damping force on the left rear wheel 3RL side, and a damping force varying device 11RR arranged with respect to the right rear wheel 3RR to be able to adjust the damping force on the right rear wheel 3RR side. The damping force varying devices 11FL, 11FR, 11RL, 11RR are connected to the ECU 9, and the damping force varying device 11 adjusts the distribution of the damping force in each wheel 3 when different control commands are output from the ECU 9 to the respective damping force control device 11. In other words, the ECU 9 can control the damping force varying devices 11FL, 11FR, 11RL, 11RR independently of each other, and can appropriately change the front/rear wheel damping force distribution, which is the distribution ratio of the damping force on the front wheel 3F side and the damping force on the rear wheel 3R side of the vehicle 2, for example, by the damping force varying devices 11FL, 11FR, 11RL, 11RR. The actuator of the damping force varying device 11 may use a drive unit or the like that realizes the changing of the damping force by switching the magnitude of the diameter of the orifice, to which the operating oil flows in and flows out, with the reciprocating motion of a piston, for example, but is not limited thereto and may be an electrically operated type.

The ECU 9 is an electronic control unit including a computer. The ECU 9 can control the drive of each unit of the vehicle 2. For example, the ECU 9 may be an electronic circuit having a well known micro-computer including a control unit such as the CPU, a storage unit such as a ROM, a RAM, and an interface as a main body. The ECU 9 is, for example, electrically connected to various detecting units arranged in each of the vehicle 2 such as the in-phase/reverse-phase ratio detecting unit 7 and the vehicle speed sensor 8, for example, and is electrically connected to the drive unit of each unit of the vehicle 2 such as the active stabilizer 10 and the damping force varying device 11. When an electric signal corresponding to the detection result detected by the various detecting units is input, the ECU 9 outputs a drive signal to each unit of the vehicle 2 according to the input detection result to control the drive thereof. FIG. 2 is a block diagram illustrating a configuration of the ECU 9 in the vehicle control device 1 of the present embodiment.

As illustrated in FIG. 2, the ECU 9 related to the vehicle control device 1 of the present embodiment functionally includes a roll acquiring unit 9a, a pitch acquiring unit 9b, a synthesizing unit 9c, a roll damping control unit 9d, and a front/rear damping distribution determining unit 9e.

Among the configurations of the ECU 9, the roll acquiring unit 9a is a roll acquiring means that acquires the roll amount generated in the vehicle 2. The roll amount is a numerical value indicating the vibration in the roll direction, and is, for example, a roll changing amount such as the roll angular speed, the roll angular acceleration. The roll acquiring unit 9a includes a stroke sensor in the shock absorber of the suspension 14, and detects the stroke speed of the both shock absorbers in the left-right direction (wheels 3FL, 3RL on the left side and wheels 3FR, 3RR on the right side) of the vehicle body 2A with the stroke sensor, and obtains the roll amount by the difference in the detected stroke speeds of the both shock absorbers.

The pitch acquiring unit 9b is a pitch acquiring means that acquires the pitch amount generated in the vehicle 2. The pitch amount is a numerical value indicating the vibration in the pitch direction, and is, for example, a pitch changing amount such as the pitch angular speed, the pitch angular acceleration. The pitch acquiring unit 9b includes a stroke sensor in the shock absorber of the suspension 14, and detects the stroke speed of the both shock absorbers in the front-back direction (wheels 3F and wheels 3R) of the vehicle body 2A with the stroke sensor, and obtains the roll amount by the difference in the detected stroke speeds of the both shock absorbers.

The roll acquiring unit 9a or the pitch acquiring unit 9b is not limited to directly acquiring the roll amount and the pitch amount, and may acquire the roll amount (roll changing amount such as roll angular speed, roll angular acceleration) or the pitch amount (pitch changing amount such as pitch angular speed, pitch angular acceleration) based on at least one of the vehicle speed detected by the vehicle speed sensor 8, the road surface in-phase/reverse-phase ratio detected by the in-phase/reverse-phase ratio detecting unit 7, and the roll damping control amount (or roll damping force based on the control amount) output by the roll damping control unit 9d. In other words, the roll amount and the pitch amount change according to the vehicle speed, the road surface in-phase/reverse-phase ratio, and the roll damping control amount, and hence the roll amount and the pitch amount can be obtained based on at least one of the above.

The synthesizing unit 9c is a synthesizing means that synthesizes the roll amount (roll changing amount such as roll angular speed, roll angular acceleration) and the pitch amount (pitch changing amount such as pitch angular speed, pitch angular acceleration) to acquire a synthesized value. For example, the synthesized value may be a square root of the square sum of the roll amount and the pitch amount. The synthesizing unit 9c may synthesize the roll and the pitch through a synthesizing method that takes into consideration the sensitivity of humans. In other words, the synthesizing unit 9c may set the weighting of the roll amount large with respect to the pitch amount and calculate the synthesized value since the roll amount is more susceptive to humans than the pitch amount. For example, if the square root of the square sum is used as the synthesized value, the synthesizing unit 9c can obtain the synthesized value by the following equation.

$$\text{(synthesized value)} = \sqrt{\{\alpha^2 \times \text{(roll angular speed)}^2 + \text{(pitch angular speed)}^2\}}$$

(Here, $\alpha$ is the weighting and is the sensitivity coefficient of the roll with respect to the pitch. For example, $\alpha$=2 to 3 (times) is preferable. The roll angular acceleration may be used in place of the roll angular speed, and the pitch angular acceleration may be used in place of the pitch angular speed).

Therefore, the roll vibration and the pitch vibration can be simultaneously suppressed by using the synthesized value in which the roll and the pitch are synthesized. Furthermore, the comfortableness in riding that takes into consideration the sensitivity of humans can be quantified by synthesizing the roll and the pitch in view of the sensitivity of humans.

The roll damping control unit 9d is a roll damping force control means that controls the actuator 13 of the active stabilizer 10 by transmitting a roll damping control amount (command value) to the active stabilizer 10, and suppresses the roll vibration of the vehicle 2 with the roll damping force based on the roll damping control amount. The roll damping control amount is variable, and may be variably set by a user (driver, etc.) through an operation unit (not illustrated) of the ECU 9, for example. The roll damping control unit 9d may change the roll damping control amount according to the travelling mode (normal travelling mode and high-speed travelling mode).

The front/rear damping distribution determining unit 9e is a front/rear wheel damping force determination means that determines the front/rear wheel damping distribution based on the synthesized value acquired by the synthesizing unit 9c, and controls the damping force varying device 11 based on the determined front/rear wheel damping force distribution. The front/rear wheel damping force distribution (hereinafter referred to as "front/rear damping distribution") refers to the distribution of the damping force on the front wheel 3F side and the damping force on the rear wheel 3R side by the shock absorber of the suspension 14, and such distribution is expressed with ratio, percentage, or rate. As described above, the damping force of each wheel 3 by the shock absorber can be variably controlled by the damping force varying devices 11FL, 11FR, 11RL, and 11RR of each wheel 3. Thus, when the front/rear damping distribution is determined, the front/rear damping distribution determining unit 9e transmits each command value to each damping force varying device 11 so as to become the determined front/rear damping distribution. For example, if the front/rear damping distribution is determined as 1 : 2, the front/rear damping distribution determining unit 9e transmits the command value "x" to the damping force varying devices 11FL, 11FR on the front wheel 3F side, and transmits the command value "2x" to the damping force varying devices 11RL, 11RR on the rear wheel 3R side. The damping force by the shock absorber becomes 1 : 2 between the front wheel 3F and the rear wheel 3R when the actuator of each damping force varying device 11 is driven based on the command value.

The front/rear damping distribution determining unit 9e may control the front/rear damping distribution so as to minimize the synthesized value acquired by the synthesizing unit 9c. As described above, the synthesized value is obtained by quantifying the comfortableness in riding while placing importance on the roll that is more susceptive to humans than the pitch, and thus the comfortableness in riding can be optimized by controlling the front/rear damping distribution to minimize the synthesized value. A front/rear damping distribution map defining the front/rear damping distribution in which the synthesized value becomes a minimum may be stored in advance in the storage unit of the ECU 9, and the front/rear damping distribution determining unit 9e may determine the front/rear damping distribution corresponding to the synthesized value based on the front/rear damping distribution map. The front/rear damping distribution map may be a map capable of determining the front/rear damping distribution based on the vehicle speed, the road surface in-phase/reverse-phase ratio, and the roll damping control amount. In other words, since the pitch amount and the roll amount change depending on the road surface in-phase/reverse-phase ratio, the vehicle speed, and the roll damping control amount, as described above, a four-dimensional map in which the front/rear damping distribution in which the synthesized value of the pitch amount and the roll amount becomes a minimum is corresponded with the road surface in-phase/reverse-phase ratio, the vehicle speed, and the roll damping control amount may be created and stored in the storage unit of the ECU 9. The front/rear damping distribution determining unit 9e may obtain the front/rear damping distribution corresponding to the road surface in-phase/reverse-phase ratio detected by the in-phase/reverse-phase ratio detecting unit 7, the vehicle speed detected by the vehicle speed sensor 8, and the roll damping control amount commanded by the roll damping control unit 9d based on the front/rear damping distribution map stored in the storage unit of the ECU 9. The ECU 9 consequently obtains the roll amount and the pitch amount based on the road surface in-phase/reverse-phase ratio, the vehicle speed, and the roll damping control amount, and performs the processing same as determining the front/rear damping distribution in which the synthesized value of the roll amount and the pitch amount becomes a minimum.

In the example described above, the front/rear damping distribution is obtained by using the front/rear damping distribution map, but the present embodiment is not limited thereto. In other words, the ECU 9 may obtain the front/rear damping distribution based on a mathematical equation corresponding to the front/rear damping map.

The description of the configuration of the vehicle control device 1 according to the present embodiment is as provided above.

[2. Processing]

One example of the processing of the vehicle control device 1 according to the present embodiment will now be described with reference to FIG. 5 to FIG. 15. FIG. 5 is a flowchart illustrating one example of the processing of the vehicle control device 1 according to the present embodiment. The control flow of FIG. 5 is repeatedly executed during the travelling of the vehicle 2. The present control flow is repeatedly executed at a predetermined interval, for example.

As illustrated in FIG. 5, the roll acquiring unit 9a of the ECU 9 first acquires the roll amount generated in the vehicle 2 (step S1). The roll acquiring unit 9a may detect the stroke speed of the shock absorbers in the left-right direction of the vehicle body 2A (wheels 3FL, 3RL on the left side, wheels 3FR, 3RR on the right side) with stroke sensors arranged in the both shock absorbers of the suspension 14, and obtain the roll angular speed from the difference in the detected stroke speeds of the both shock absorbers.

The pitch acquiring unit 9b of the ECU 9 acquires the pitch amount generated in the vehicle 2 (step S2). The pitch acquiring unit 9b may detect the stroke speed of the shock absorbers in the front-back direction of the vehicle body 2A (front wheel 3F and rear wheel 3R) with stroke sensors arranged in the both shock absorbers of the suspension 14, and obtain the pitch angular speed from the difference in the detected stroke speeds of the both shock absorbers.

The processing of steps S1 and S2 may be performed in the reverse order or may be performed in parallel at the same time. The roll acquiring unit 9a or the pitch acquiring unit 9b is not limited to directly acquiring the roll amount and the pitch amount, and may acquire the roll amount or the pitch amount based on at least one of the vehicle speed detected by the vehicle speed sensor 8, the road surface in-phase/reverse-phase ratio detected by the in-phase/reverse-phase ratio detecting unit 7, and the roll damping control amount output by the roll damping control unit 9d. FIG. 6 to FIG. 8 are views illustrating a relationship of the roll angular speed and the pitch angular speed when the front/rear damping distribution is changed at a predetermined vehicle speed. FIG. 6 illustrates a case in which the vehicle speed is 40 km/h, FIG. 7 illustrates a case in which the vehicle speed is 80 km/h, and FIG. 8 illustrates a case in which the vehicle speed is 120 km/h.

As illustrated in FIG. 6 to FIG. 8, when the front/rear damping distribution is changed, the roll and the pitch show conflicting vibration property. In particular, when the vehicle speed is 120 km/h (FIG. 8), the pitch angular speed rapidly rises whereas the roll angular speed rapidly reduces while changing the front/rear damping distribution between zero and one. This relationship greatly differs among the respective vehicle speeds (FIG. 6 to FIG. 8), where the pitch angular speed reduces and the roll angular speed rises in the case of vehicle speed of 40 km/h (FIG. 6). Therefore, the relationship between roll and pitch greatly depends on the vehicle speed. Although not illustrated, similar result is obtained for the roll damping control amount with the road surface in-phase/reverse-phase ratio, that is, the relationship of roll and pitch is also found to be dependent thereon. Therefore, since the roll amount and the pitch amount change depending on the vehicle speed, the road surface in-phase/reverse-phase ratio, and the roll damping control amount, the roll acquiring unit 9a and the pitch acquiring unit 9b may obtain the roll amount and the pitch amount based on at least one of the above.

Returning again to FIG. 5, the synthesizing unit 9c of the ECU 9 synthesizes the roll amount and the pitch amount through the synthesizing method that takes into consideration the sensitivity of humans to acquire the synthesized value (step S3). For example, since the roll amount is more susceptive to humans than the pitch amount, the synthesizing unit 9c may set the weighting of the roll amount large with respect to the pitch amount and calculate the synthesized amount by the following equation.

$$(\text{synthesized value})=\sqrt{\alpha^2\times(\text{roll angular speed})^2+(\text{pitch angular speed})^2}$$

(Here, $\alpha$ is the weighting and is the sensitivity coefficient of the roll with respect to the pitch. For example, $\alpha$=2 to 3 (times) is preferable. The roll angular acceleration may be used in place of the roll angular speed, and the pitch angular acceleration may be used in place of the pitch angular speed).

FIG. 9 to FIG. 11 are views in which the synthesized values are calculated through the above equation and plotted with respect to the result of the roll amount and the pitch amount illustrated in FIG. 6 to FIG. 8. The synthesized value is calculated by adding also the relationship of the roll amount and the pitch amount when the road surface in-phase/reverse phase is changed between 0.1 and 0.3.

Therefore, the roll vibration and the pitch vibration can be simultaneously handled and the comfortableness in riding that is based on the sensitivity of humans can be quantified by using the synthesized value of the roll and the pitch synthesized through the synthesizing method that takes into consideration the sensitivity of humans. In other words, the vertical axis (synthesized value) of FIG. 9 to FIG. 11 represents the numeralized comfortableness in riding, and thus the comfortableness in riding can be optimized by selecting the front/ rear damping distribution at the lowest point.

Returning again to FIG. 5, the front/rear damping distribution determining unit 9e of the ECU 9 determines the front/rear damping distribution based on the synthesized value acquired by the synthesizing unit 9c (step S4). The front/ rear damping distribution determining unit 9e may determine the front/rear damping distribution so that the synthesized value acquired by the synthesizing unit 9c becomes a minimum. In other words, as described above, the obtained synthesized value is obtained by quantifying the comfortableness in riding while placing importance on the roll that is more susceptive to humans, and thus the comfortableness in riding can be optimized by controlling the front/rear damping distribution so that the synthesized value becomes a minimum. The front/rear damping distribution determining unit 9e controls the damping force varying device 11 based on the determined front/rear damping distribution. More specifically, after determining the front/rear damping distribution, the front/rear damping distribution determining unit 9e allocates the command value to give to the damping force varying devices 11FL, 11FR on the front wheel 3F side and the command value to give to the damping force varying devices 11RL, 11RR on the rear wheel 3R side so as to achieve the determined front/rear damping distribution. The damping force by the shock absorber follows the front/rear damping distribution determined by the front/rear damping distribution determining unit 9e between the front wheel 3F and the rear wheel 3R by driving the actuator of each damping force varying device 11 based on the given command value.

Therefore, according to the present vehicle control device 1, the roll and the pitch can be simultaneously suppressed since the front/ rear damping distribution is controlled based on the synthesized value of the roll and the pitch. The roll amount and the pitch amount change according to the vehicle speed, the road surface in- phase/ reverse-phase ratio, and the roll damping control amount, and thus the roll and the pitch can be accurately detected by obtaining the roll amount or the pitch amount based on at least one of the above. Since the roll and the pitch are synthesized in view of the sensitivity of humans and the front/ rear damping distribution is determined so that the synthesized value becomes a minimum, the comfortableness in riding can be optimized.

(Modified example of processing)

A modified example of the processing of the vehicle control device 1 according to the present embodiment will now be described with reference to FIG. 12 to FIG. 15.

Since the roll amount and the pitch amount are changed by (1) road surface in-phase/reverse-phase ration, (2) vehicle speed, (3) roll damping control amount, and (4) front/rear damping distribution, the control map for optimizing the performance in comfortableness in riding for the time of change of (1) to (4) is prepared by the synthesizing method that takes into consideration the sensitivity of humans, and the active stabilizer 10 and the damping force varying device 11 are controlled in cooperation in the present modified example. In other words, in the present modified example, the front/rear damping distribution map in which the front/rear damping distribution where the synthesized value becomes a minimum is defined in advance is stored in the storage unit of the ECU 9 for the relationships of (1) to (3), and the ECU 9 of the vehicle control device 1 determines the front/rear damping distribution based on the front/rear damping distribution map. FIG. 12 to FIG. 14 are views illustrating one example of the front/rear damping distribution map in which the front/rear damping distribution where the synthesized value becomes a minimum is plotted.

In other words, FIG. 12 to FIG. 14 are views in which the front/rear damping distribution where the synthesized value of the roll angular speed and the pitch angular speed becomes a minimum (i.e., lowest point in the figure) in FIG. 9 to FIG. 11 is plotted. In each figure, the roll rigidity of the active stabilizer 10 is constant, where FIG. 12 to FIG. 14 are created including the results of when the roll damping control amount is changed. In other words, FIG. 12 illustrates a case in which there is no roll damping control amount, FIG. 13 illustrates a case in which the roll damping control amount is small, and FIG. 14 illustrates a case in which the roll damping control amount is large.

The front/rear damping distribution map created in this manner becomes a four-dimensional map that determines one output of the front/rear damping distribution from three inputs of the road surface in-phase/reverse-phase ratio, the vehicle speed, and the roll damping control amount. FIG. 12 to FIG. 14 are merely illustrated as a two-dimensional map due to the restriction that the figures are two-dimensional, but are actually stored as a fourth-dimensional map in the storage unit of the ECU 6.

An example of the processing based on the assumption that the front/rear damping distribution map is stored in the storage unit of the ECU 9 will now be described. FIG. 15 is a flowchart illustrating a modified example of the processing of the vehicle control device 1 according to the present embodiment.

As illustrated in FIG. 15, the ECU 9 of the vehicle control device 1 detects the road surface in-phase/reverse-phase ratio by the in-phase/reverse-phase ratio detecting unit 7 (step S11), detects the vehicle speed of the vehicle 2 by the vehicle speed sensor 8 (step S12), and detects the roll damping amount (roll damping force) of the active stabilizer 10 (step S13). The roll damping amount of the active stabilizer 10 is controlled based on the roll damping control amount commanded by the roll damping control unit 9d of the ECU 9, and thus the roll damping control amount is used in this modified example. Steps S11 to S13 are detected simultaneously in parallel, as illustrated in FIG. 15.

The front/rear damping distribution determining unit 9e of the ECU 9 performs verifying processing with the front/rear damping distribution map stored in the storage unit of the ECU 9 for the road surface in-phase/reverse-phase ratio detected by the in-phase/reverse-phase ratio detecting unit 7, the vehicle speed detected by the vehicle speed sensor 8, and the roll damping control amount commanded by the roll damping control unit 9d (step S14).

The front/rear damping distribution determining unit 9e of the ECU 9 determines the front/rear damping distribution corresponding to the road surface in-phase/reverse-phase ratio, the vehicle speed, and the roll damping control amount as a result of matching with the front/rear damping distribution map (step S15). The front/rear damping distribution determining unit 9e distributes the command value to give to the damping force varying devices 11FL, 11FR on the front wheel 3F side and the command value to give to the damping force varying devices 11RL, 11RR on the rear wheel 3R side so as to become the determined front/rear damping distribution, and thus the damping force by the shock absorber becomes the determined front/rear damping distribution between the front wheel 3F and the rear wheel 3R.

Therefore, one output, which is the front/ rear damping distribution, can be obtained for the three inputs of the road surface in- phase/ reverse- phase ratio, the vehicle speed, and the roll damping control amount by using the front/ rear damping distribution map. As a result, the vehicle control device 1 obtains the front/ rear damping distribution in which the synthesized value of the roll amount and the pitch amount becomes a minimum by the front/ rear damping distribution map based on the three inputs of the road surface in- phase/ reverse- phase ratio, the vehicle speed, and the roll damping control amount. Thus, the vehicle control in which the performance in comfortableness in riding that takes into consideration the sensitivity of humans becomes optimum can be performed while simultaneously suppressing the roll vibration and the pitch vibration.

In the modified example described above, an example of obtaining one output, which is the front/rear damping distribution, for three inputs of the road surface in-phase/reverse-phase ratio, the vehicle speed, and the roll damping control amount has been described but is not limited thereto, and two outputs of the front/rear damping distribution and the roll damping control amount can be obtained for two inputs of the road surface in-phase/reverse-phase ratio and the vehicle speed as long as the roll damping control amount can be arbitrarily changed. In other words, the vehicle control device 1 may obtain the optimum (i.e., in which the synthesized value becomes minimum) combination of the front/rear damping distribution and the roll damping control amount corresponding to the road surface in-phase/reverse-phase ratio and the vehicle speed based on the front/rear damping map, and control the roll damping force by the active stabilizer 10 and the front/rear damping distribution by the damping force varying device 11 in cooperation by the roll damping control unit 9d and the front/rear damping distribution determining unit 9e.

The vehicle control device according to the embodiment of the present invention described above is not limited to the embodiment described above, and various changes can be made within a scope defined in the Claims.

In the description made above, the vehicle control device has been described to include the active stabilizer capable of adjusting the roll rigidity of the vehicle, but is not limited thereto, and may be configured to include an active suspension capable of adjusting the roll rigidity of the vehicle in place of the active stabilizer.

In the description made above, the control device of the vehicle control device has been described as the ECU for controlling each unit of the vehicle, but is not limited thereto, and may have a configuration of being configured separate from the ECU to exchange information such as detection signals, drive signals, control commands mutually through the ECU.

The contents disclosed in the embodiment described above can be appropriately combined.

Industrial Applicability

The vehicle control device according to the present invention is suitably applied to a vehicle control device mounted on various vehicles.

Reference Signs List

| | |
|---|---|
| 1 | vehicle control device |
| 2 | vehicle |
| 2A | vehicle body |
| 3 | wheel |
| 4 | tire |
| 5 | steering wheel |
| 7 | in-phase/reverse-phase ratio detecting unit |
| 8 | vehicle speed sensor |
| 9 | ECU |
| 9a | roll acquiring unit |
| 9b | pitch acquiring unit |
| 9c | synthesizing unit |
| 9d | roll damping control unit |
| 9e | front/rear damping distribution determining unit |
| 10 | active stabilizer |
| 11 | damping force varying device |
| 14 | suspension |

## Claims

1. A vehicle control device comprising:

   a roll acquiring means configured to acquire a roll changing amount generated in a vehicle;
   a pitch acquiring means configured to acquire a pitch changing amount generated in the vehicle;
   a synthesizing means configured to synthesize the roll changing amount and the pitch changing amount to acquire a synthesized value; and
   a front/rear wheel damping force distributing means configured to control a front/rear wheel damping force distribution based on the synthesized value acquired by the synthesizing means.

2. The vehicle control device according to claim 1, wherein
   the front/rear wheel damping force distributing means controls the front/rear wheel damping force distribution such that the synthesized value becomes a minimum.

3. The vehicle control device according to claim 1, wherein
   the roll acquiring means or the pitch acquiring means acquires a roll angular speed, which is the roll changing amount, or a pitch angular speed, which is the pitch changing amount, based on at least one of a vehicle speed, a road surface in-phase/reverse-phase ratio and a roll damping control amount.

4. The vehicle control device according to claim 1 or 2, wherein
   the synthesizing means calculates the synthesized value with a weighting of the roll changing amount made large with respect to the pitch changing amount.

5. A vehicle control device comprising:

   a vehicle speed detecting means configured to detect a vehicle speed;
   an in-phase/reverse-phase ratio detecting means configured to detect a road surface in-phase/reverse-phase ratio; and
   a roll damping force varying means configured to control a roll damping force by a variable roll damping control amount, wherein
   a front/rear wheel damping force distribution is determined from a front/rear wheel damping force distribution map based on the vehicle speed, the road surface in-phase/reverse-phase ratio and the roll damping control amount.

FIG.1

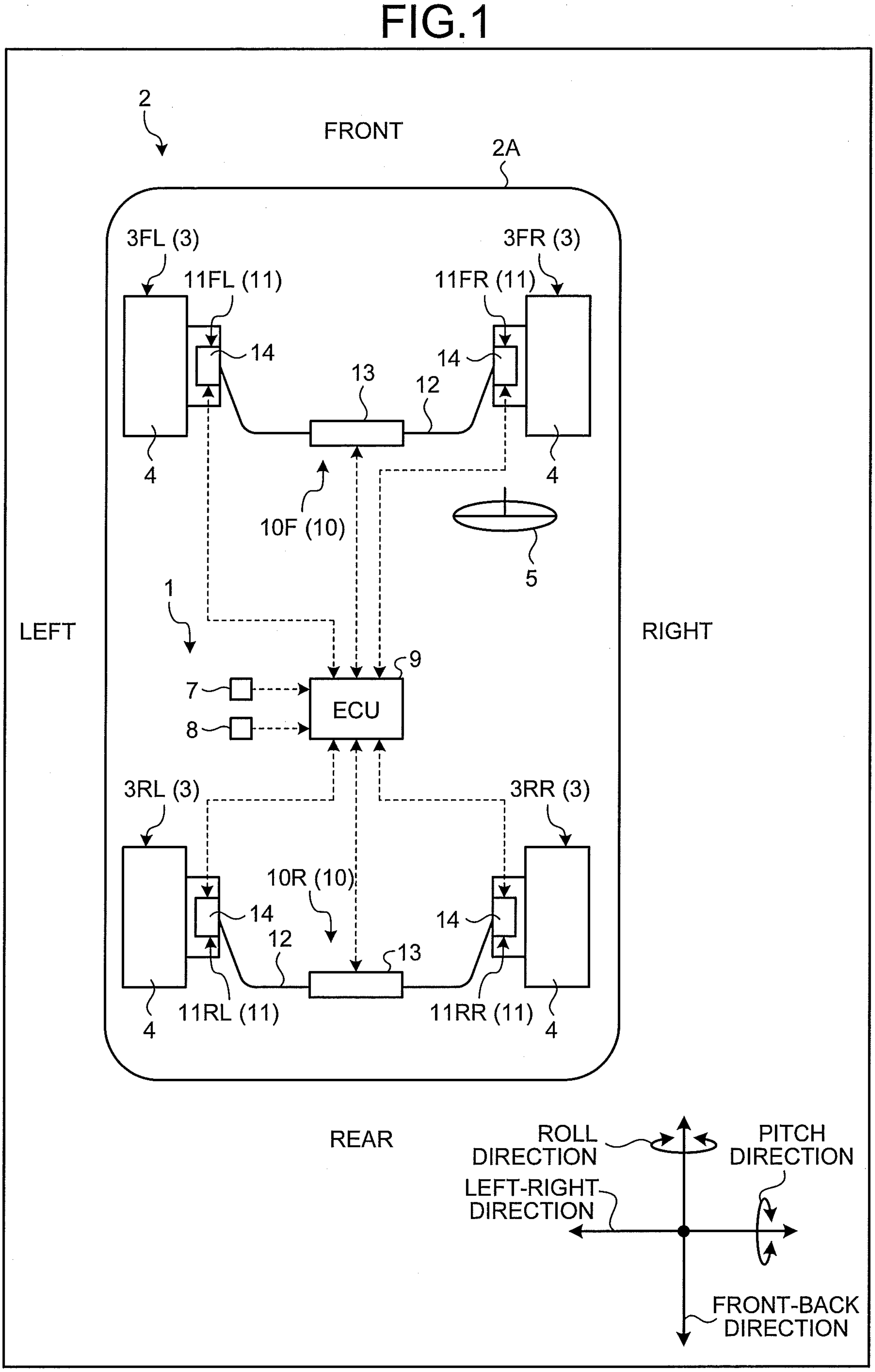
2
FRONT
2A
3FL (3)
11FL (11)
3FR (3)
11FR (11)
14
13
12
14
4
4
10F (10)
5
1
LEFT
RIGHT
9
7
ECU
8
3RL (3)
3RR (3)
10R (10)
14
14
12
13
4
11RL (11)
11RR (11)
4
REAR
ROLL DIRECTION
PITCH DIRECTION
LEFT-RIGHT DIRECTION
FRONT-BACK DIRECTION

FIG.2

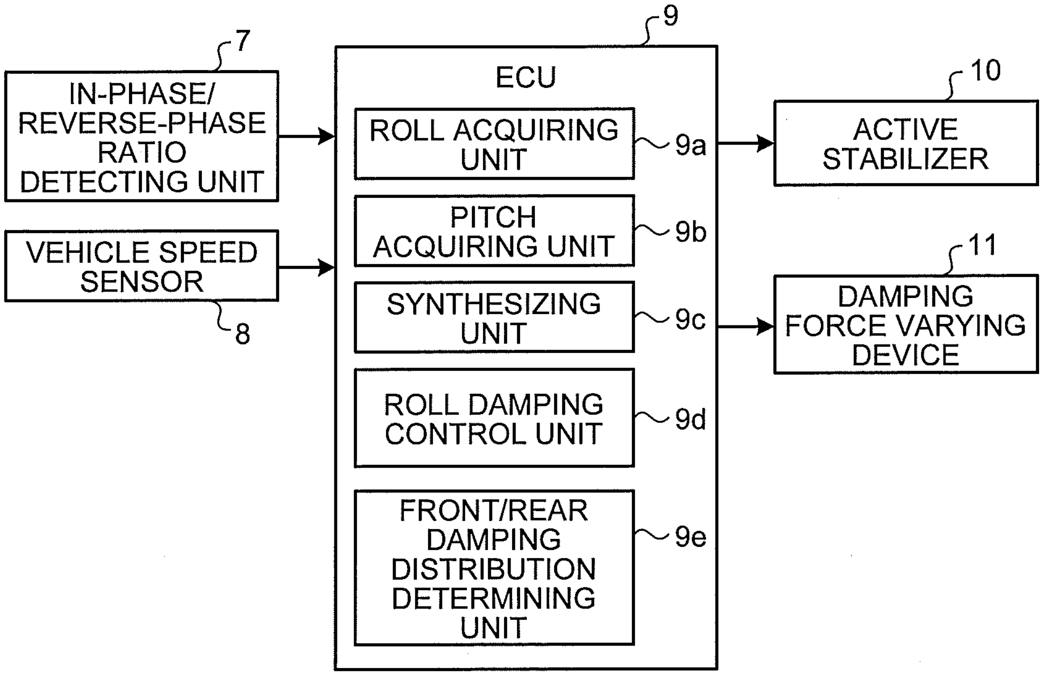

7
IN-PHASE/ REVERSE-PHASE RATIO DETECTING UNIT
VEHICLE SPEED SENSOR
8
9
ECU
ROLL ACQUIRING UNIT
9a
PITCH ACQUIRING UNIT
9b
SYNTHESIZING UNIT
9c
ROLL DAMPING CONTROL UNIT
9d
FRONT/REAR DAMPING DISTRIBUTION DETERMINING UNIT
9e
10
ACTIVE STABILIZER
11
DAMPING FORCE VARYING DEVICE

FIG.3

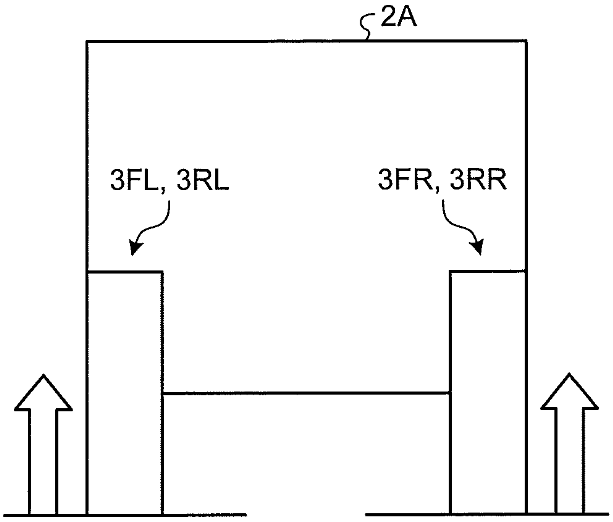


FIG.4

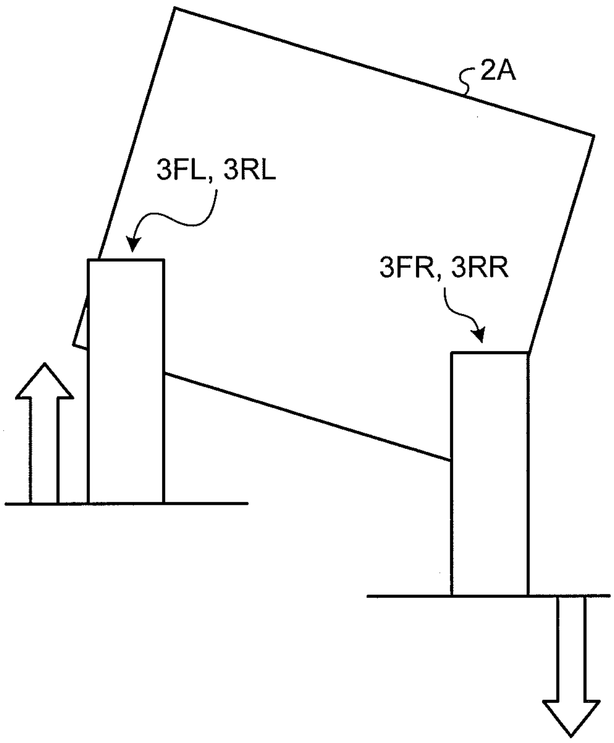

FIG.5

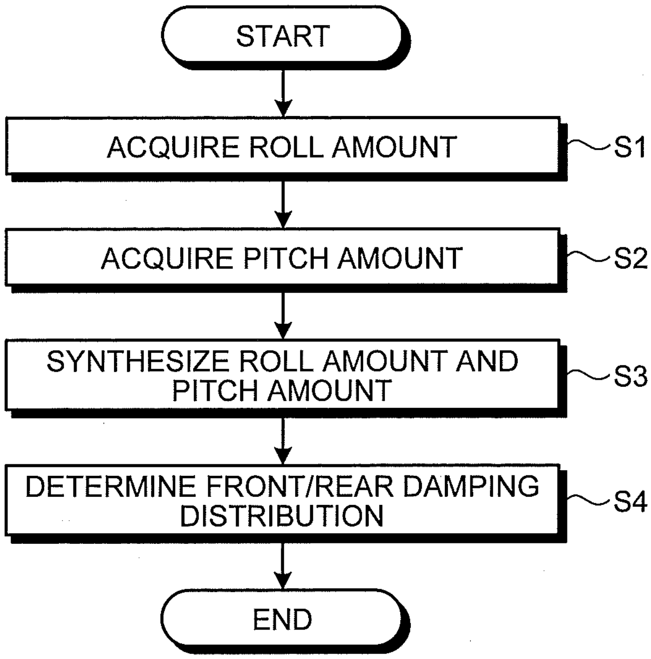
START
ACQUIRE ROLL AMOUNT
S1
ACQUIRE PITCH AMOUNT
S2
SYNTHESIZE ROLL AMOUNT AND PITCH AMOUNT
S3
DETERMINE FRONT/REAR DAMPING DISTRIBUTION
S4
END

FIG.6

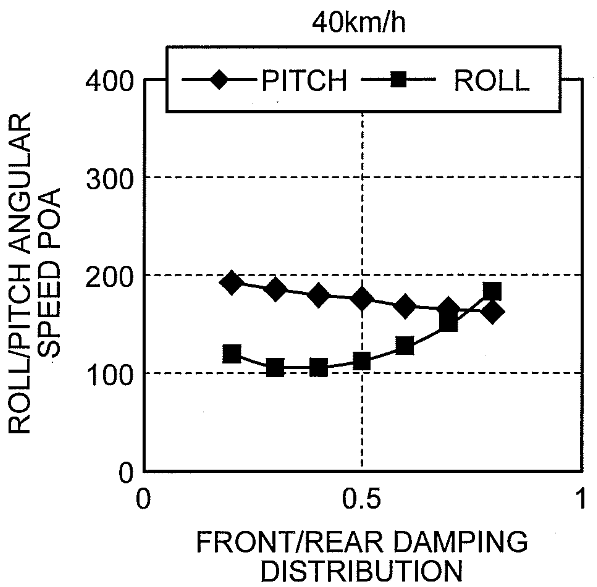
40km/h
PITCH
ROLL
ROLL/PITCH ANGULAR SPEED POA
400
300
200
100
0
0
0.5
1
FRONT/REAR DAMPING DISTRIBUTION

FIG.7

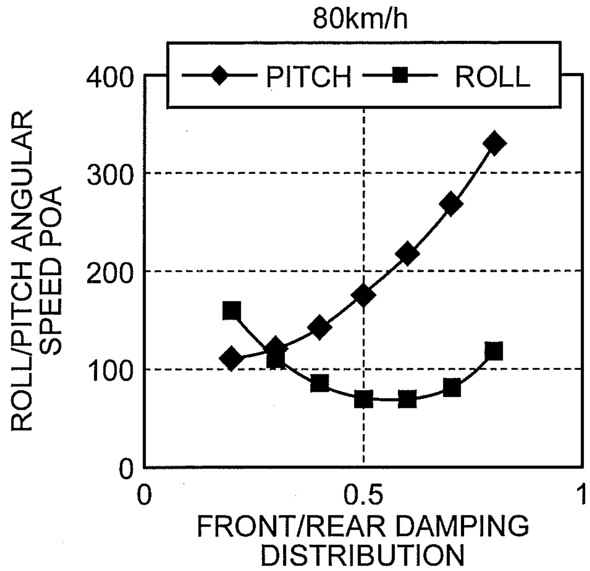
80km/h
PITCH
ROLL
ROLL/PITCH ANGULAR SPEED POA
400
300
200
100
0
0
0.5
1
FRONT/REAR DAMPING DISTRIBUTION

FIG.8

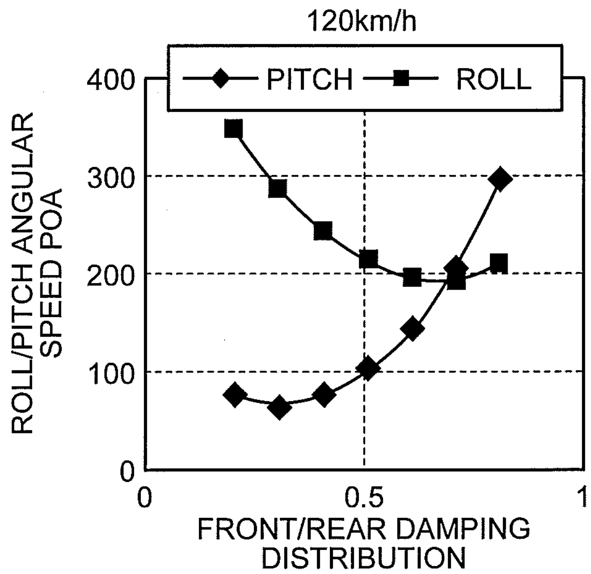
120km/h
PITCH
ROLL
ROLL/PITCH ANGULAR SPEED POA
400
300
200
100
0
0
0.5
1
FRONT/REAR DAMPING DISTRIBUTION

FIG.9

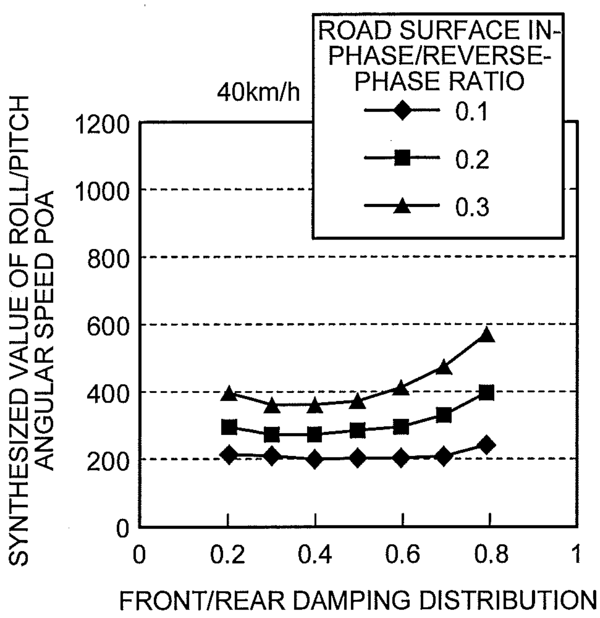
40km/h
ROAD SURFACE IN-PHASE/REVERSE-PHASE RATIO
0.1
0.2
0.3
SYNTHESIZED VALUE OF ROLL/PITCH ANGULAR SPEED POA
1200
1000
800
600
400
200
0
0
0.2
0.4
0.6
0.8
1
FRONT/REAR DAMPING DISTRIBUTION

FIG.10

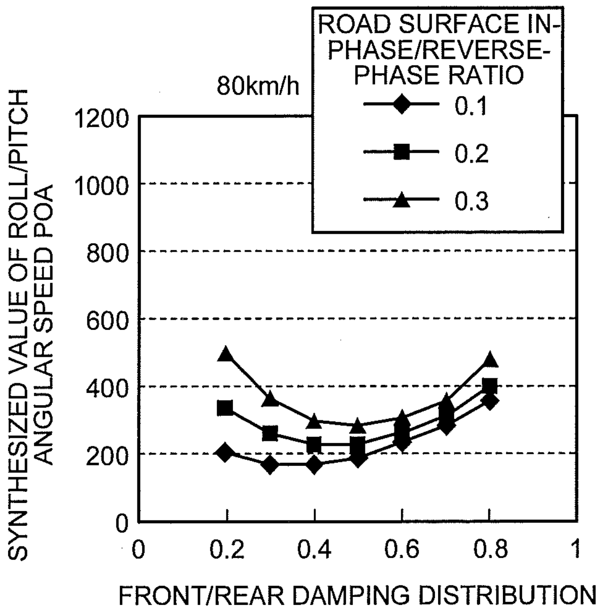
80km/h
ROAD SURFACE IN-PHASE/REVERSE-PHASE RATIO
0.1
0.2
0.3
SYNTHESIZED VALUE OF ROLL/PITCH ANGULAR SPEED POA
1200
1000
800
600
400
200
0
0
0.2
0.4
0.6
0.8
1
FRONT/REAR DAMPING DISTRIBUTION

FIG.11

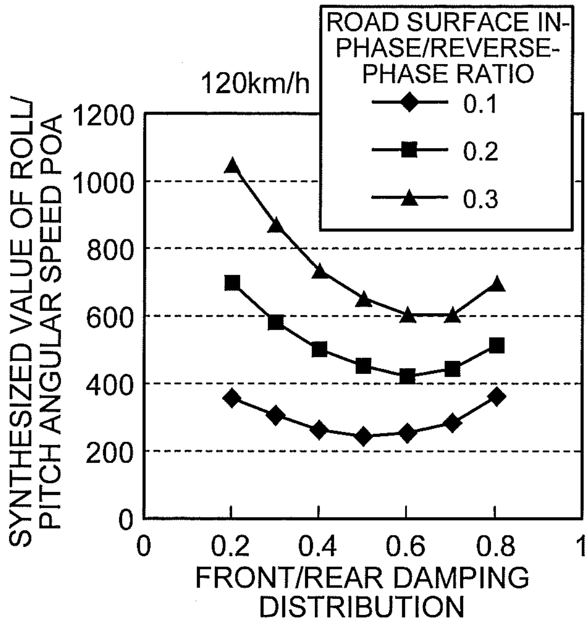
ROAD SURFACE IN-PHASE/REVERSE-PHASE RATIO
0.1
0.2
0.3
120km/h
SYNTHESIZED VALUE OF ROLL/PITCH ANGULAR SPEED POA
1200
1000
800
600
400
200
0
0
0.2
0.4
0.6
0.8
1
FRONT/REAR DAMPING DISTRIBUTION

FIG.12

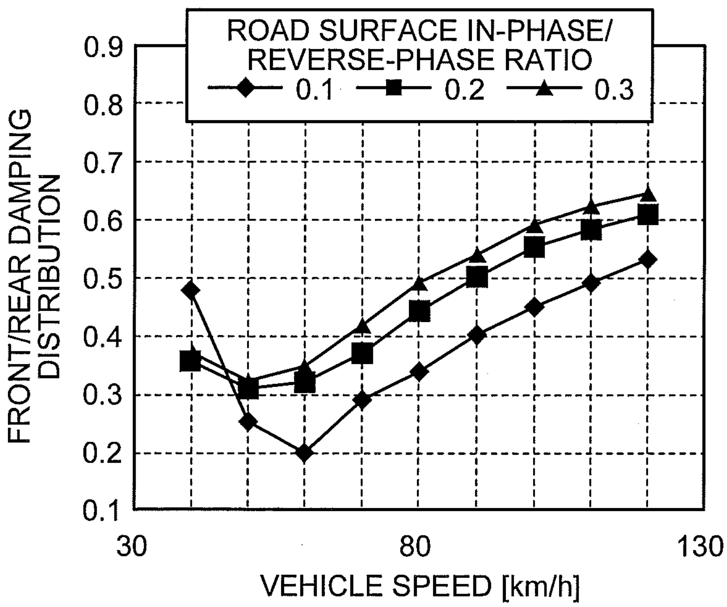
ROAD SURFACE IN-PHASE/REVERSE-PHASE RATIO
0.1
0.2
0.3
FRONT/REAR DAMPING DISTRIBUTION
0.9
0.8
0.7
0.6
0.5
0.4
0.3
0.2
0.1
30
80
130
VEHICLE SPEED [km/h]

FIG.13

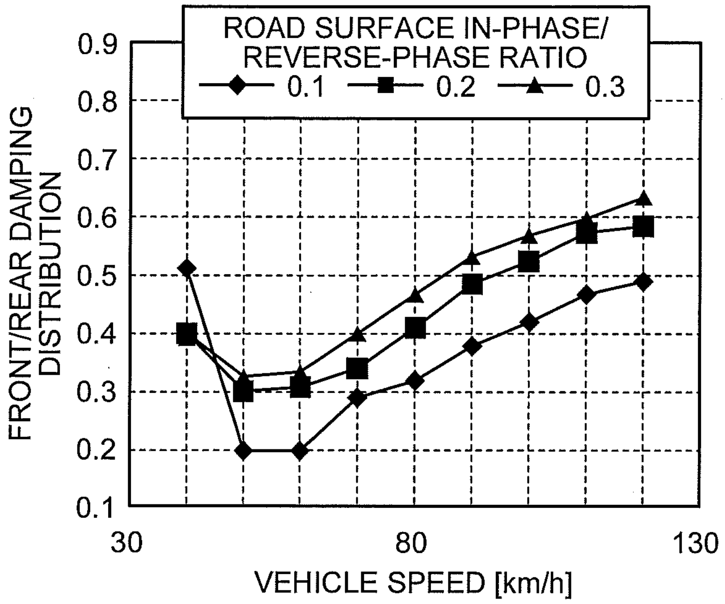
ROAD SURFACE IN-PHASE/
REVERSE-PHASE RATIO
0.1
0.2
0.3
FRONT/REAR DAMPING DISTRIBUTION
0.9
0.8
0.7
0.6
0.5
0.4
0.3
0.2
0.1
30
80
130
VEHICLE SPEED [km/h]

FIG.14

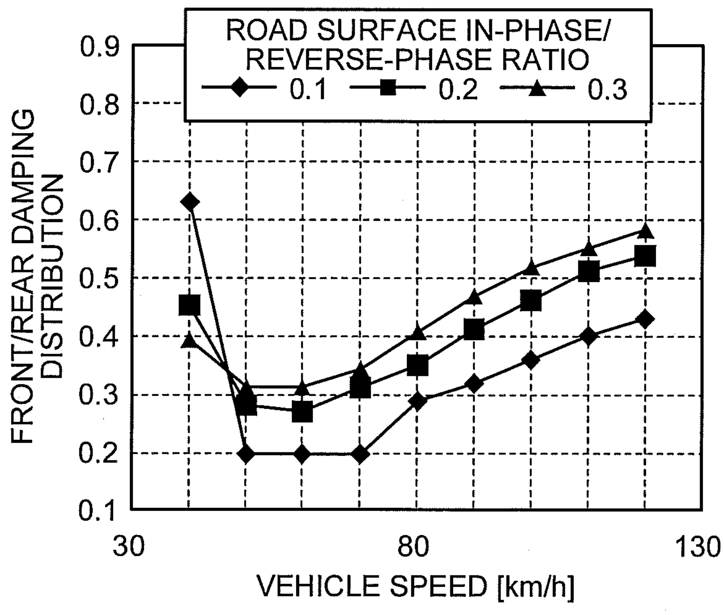
ROAD SURFACE IN-PHASE/
REVERSE-PHASE RATIO
0.1
0.2
0.3
FRONT/REAR DAMPING DISTRIBUTION
0.9
0.8
0.7
0.6
0.5
0.4
0.3
0.2
0.1
30
80
130
VEHICLE SPEED [km/h]

FIG.15

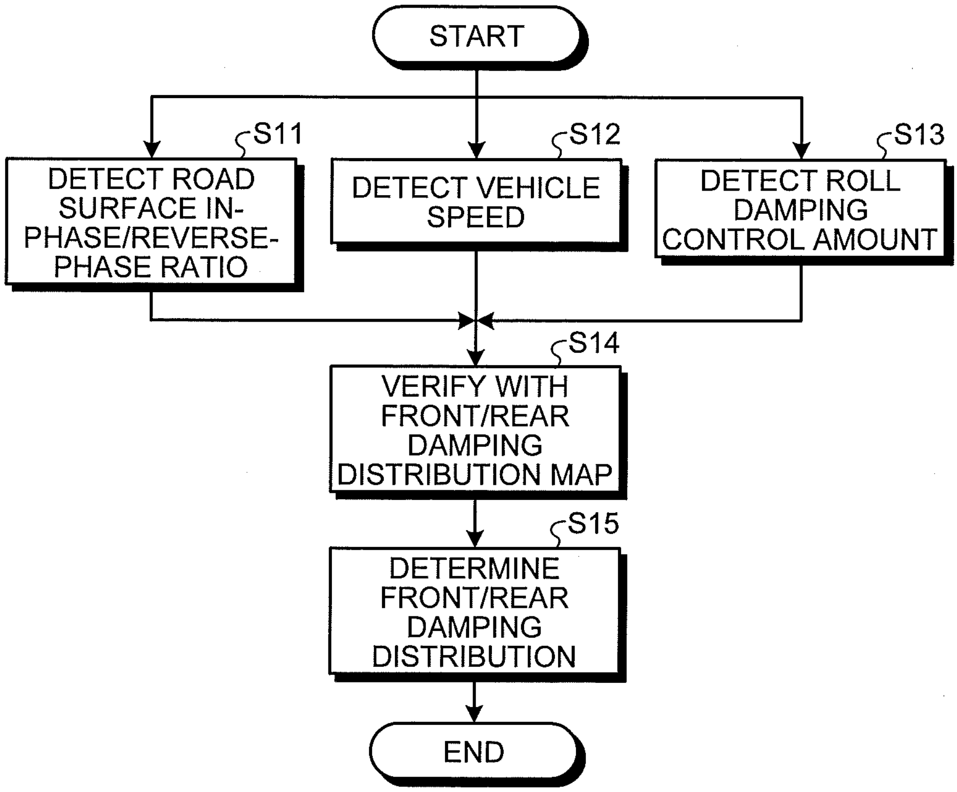
START
S11
DETECT ROAD SURFACE IN-PHASE/REVERSE-PHASE RATIO
S12
DETECT VEHICLE SPEED
S13
DETECT ROLL DAMPING CONTROL AMOUNT
S14
VERIFY WITH FRONT/REAR DAMPING DISTRIBUTION MAP
S15
DETERMINE FRONT/REAR DAMPING DISTRIBUTION
END

## INTERNATIONAL SEARCH REPORT

International application No.
PCT/JP2010/070296

A. CLASSIFICATION OF SUBJECT MATTER
*B60G17/015*(2006.01)i, *B60G21/055*(2006.01)i

According to International Patent Classification (IPC) or to both national classification and IPC

B. FIELDS SEARCHED

Minimum documentation searched (classification system followed by classification symbols)
B60G1/00-99/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2009-73414 A (Toyota Motor Corp.),<br>09 April 2009 (09.04.2009),<br>paragraphs [0050] to [0052]; fig. 4<br>& US 2010/0191420 A & EP 2176080 A<br>& WO 2009/038235 A1 & CN 101868363 A | 1<br>3-4 |
| Y | JP 2-179528 A (Nissan Motor Co., Ltd.),<br>12 July 1990 (12.07.1990),<br>page 4, upper right column, line 4 to lower left column, line 3; fig. 6<br>(Family: none) | 1,3-4 |
| Y | JP 11-348799 A (Honda Motor Co., Ltd.),<br>21 December 1999 (21.12.1999),<br>paragraph [0035]<br>& US 6157892 A & DE 19926745 A | 1,3-4 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 27 December, 2010 (27.12.10) | 11 January, 2011 (11.01.11) |
| Name and mailing address of the ISA/<br>Japanese Patent Office<br>Facsimile No. | Authorized officer<br><br>Telephone No. |

Form PCT/ISA/210 (second sheet) (July 2009)

**INTERNATIONAL SEARCH REPORT**

International application No.
PCT/JP2010/070296

C (Continuation). DOCUMENTS CONSIDERED TO BE RELEVANT

| Category* | Citation of document, with indication, where appropriate, of the relevant passages | Relevant to claim No. |
|---|---|---|
| Y | JP 11-198624 A (Unisia Jecs Corp.), 27 July 1999 (27.07.1999), paragraph [0009] (Family: none) | 3 |
| Y | JP 2002-248921 A (Toyota Central Research and Development Laboratories, Inc.), 03 September 2002 (03.09.2002), paragraphs [0055] to [0057] (Family: none) | 4 |
| A | JP 8-244433 A (Nissan Motor Co., Ltd.), 24 September 1996 (24.09.1996), paragraphs [0021] to [0024] (Family: none) | 1-5 |
| A | JP 2009-96366 A (Toyota Motor Corp.), 07 May 2009 (07.05.2009), entire text; all drawings & EP 2202105 A1 & WO 2009/050983 A1 & CN 101801696 A | 1-5 |
| A | JP 2009-179228 A (Toyota Motor Corp.), 13 August 2009 (13.08.2009), entire text; all drawings (Family: none) | 1-5 |
| A | JP 2008-265610 A (Aisin Seiki Co., Ltd.), 06 November 2008 (06.11.2008), entire text; all drawings & US 2008/0262690 A1 & EP 1985478 A2 | 1-5 |

Form PCT/ISA/210 (continuation of second sheet) (July 2009)

**INTERNATIONAL SEARCH REPORT**

International application No.
PCT/JP2010/070296

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

The invention in claim 1 cannot be considered to make a contribution over the invention described in the document 1 (JP 2009-73414 A, Toyota Motor Corp., 9 April 2009 (09.04.2009), paragraphs [0050] - [0052], fig. 4), and does not have a special technical feature.

1. ☐ As all required additional search fees were timely paid by the applicant, this international search report covers all searchable claims.
2. ☒ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009179228 A
- JP 2008265610 A